# EUROPEAN PATENT APPLICATION

(11) **EP 3 626 607 A1**
(43) Date of publication of application: **25.03.2020**
(21) Application number: 19195546.7
(22) Date of filing: 05.09.2019
(51) Int. Cl.: B64C 5/00, B29C 65/00, B64C 1/26, B29C 70/22, B64C 3/20, B64C 3/26, B64C 5/06

(54) **AN AIRCRAFT COMPONENT**

(30) Priority: 18.09.2018 DE 102018122909
(71) Applicant: Airbus Operations GmbH, 21129 Hamburg (DE)
(72) Inventor: Daandels, Dort, 21129 Hamburg (DE); Heck, Christian, 21129 Hamburg (DE); Eichhorn, Jochen, 70563 Stuttgart (DE)
(74) Representative: Bird & Bird LLP

(57) **Abstract**

The present invention relates to an aircraft component (1). The aircraft component (1) comprises a main body (3) and at least one lug (5) extending from the main body (3). The lug (5) is formed of a composite component (17), a sleeve (19), and a filler component (21). The sleeve (19) has a through hole (27) extending along a longitudinal axis (29). The composite component (17) comprises continuous fibers (23) and a matrix (25), the continuous fibers (23) being embedded in the matrix (25). The sleeve (19) is arranged at a distance from the main body (3). The composite component (17) extends from the main body (3) around at least a section of the outer circumferential surface (31) of the sleeve (19) and back to the main body (3). The continuous fibers (23) of the composite component (17) extend from the main body (3) around the section of the outer circumferential surface (31) of the sleeve (19) and back to the main body (3). An intermediate space (33) is formed between the sleeve (19) and the main body (3). The intermediate space (23) is delimited by the sleeve (19) and the composite component (17). The filler component (21) is arranged within the intermediate space (33).

## Description

The present invention relates to an aircraft component.

Aircraft components are used in aircrafts to fulfil certain functions, such as transferring loads. Aircraft components designed to transfer loads need to fulfil certain load requirements. Such load requirements include the ability of the aircraft components to withstand certain maximum stresses occurring during takeoff, flight, and landing such as tensile, compressive, and shear stresses. Therefore, aircraft components need to have minimum strengths, such as tensile strength, compressive strength, and shear strength, depending on the function of the respective aircraft component within the aircraft structure. These minimum strengths need to be higher than the respective maximum stresses occurring during takeoff, flight, and landing.

For example, high loads, such as tensile and compressive loads, need to be transferred between a vertical stabilizer and the fuselage of an aircraft. Therefore, the design of the interface components connecting the vertical stabilizer and the fuselage is critical with regard to load transfer.

Further, it is desirable to design aircraft components as light as possible to achieve an overall lightweight aircraft design. Light aircrafts reduce the fuel consumption of the aircraft, which is ecofriendly and increases the range of the aircraft.

DE 10 2005 059 933 A1 discloses a fiber composite component. The fiber composite component comprises a braided fiber composite element and an inner element with a through hole. The braided fiber composite element extends around the inner element.

US Patent 5,173,358 discloses a three-dimensional fabric extending around a metal bushing. The three-dimensional fabric can be impregnated with a resin to form a composite structure.

CN 103273651 A discloses a structural component comprising a metal member, high modulus, and low modulus carbon fibers. The high modulus carbon fibers and the low modulus carbon fibers are woven on the metal member to form a composite structure with woven fibers.

CN 104879646 A discloses a composite rod member. The composite rod member comprises a support body, two elements, each having a through hole, and a fiber reinforced layer. The two elements are coupled to two opposing ends of the support body. The fiber reinforced layer extends around the support body and the two elements.

It is an object of the present invention to provide a light aircraft component exhibiting high strengths being capable of transferring high loads.

This object is achieved by an aircraft component as defined by claim 1. Advantageous embodiments of the aircraft component are defined in the respective dependent claims.

According to the present invention, an aircraft component is provided, which comprises a main body and at least one lug. The lug extends from the main body and is formed of a composite component, a sleeve, and a filler component. The sleeve has a through hole extending along a longitudinal axis and is arranged at a distance from the main body. The composite component comprises continuous fibers and a matrix. The continuous fibers of the composite component are embedded in the matrix of the composite component. Further, the composite component extends from the main body around at least a section of the outer circumferential surface of the sleeve and back to the main body. In addition, the continuous fibers of the composite component extend from the main body around the section of the outer circumferential surface of the sleeve and back to the main body. An intermediate space is formed between the sleeve and the main body, which space is delimited by the sleeve and the composite component. The filler component is arranged within the intermediate space.

The composite component and the continuous fibers of the composite component extend from the main body around at least a section of the outer circumferential surface of the sleeve and back to the main body. Loads, especially tensile loads, transferred between the main body and the lug are therefore transferred between the composite component and the sleeve. These loads are especially transferred between the composite component and the sleeve via the section of the outer circumferential surface of the sleeve. Particularly, such arrangement of the continuous fibers of the composite component provides an uninterrupted load path along the continuous fibers in the composite component. This provides an increased strength, especially an increased tensile strength, of the aircraft component. Thereby, the load path within the aircraft component is optimized and a more light weight design of the aircraft component is possible for similar load requirements. Furthermore, due to the configuration of the lug, the load path between the aircraft component and further aircraft structures to which the aircraft component can be coupled, is optimized, since higher loads can be transferred via the lug. Thereby, an overall more lightweight aircraft design is possible for similar load requirements.

The main body can be any structural component of an aircraft. Preferably, the main body is a vertical stabilizer and/or a skin panel, preferably a skin panel of a vertical stabilizer, and/or a spar, preferably a spar of a vertical stabilizer. However, the present invention is not limited to this. The main body can also be a part of a vertical stabilizer and/or a part of a skin panel, preferably a part of a skin panel of a vertical stabilizer, and/or a part of a spar, preferably a part of a spar of a vertical stabilizer. Further, the main body can also be a wing or a part of a wing. The present invention is not limited to one main body. In particular, it is preferred that the aircraft component comprises multiple main bodies.

The lug is formed of a composite component, a sleeve, and a filler component. The lug may have a distal end, which may point away from the main body. The present invention is not limited to one lug. In particular, it is preferred that the aircraft component comprises multiple lugs. In case the aircraft comprises multiple lugs, each of the multiple lugs can be configured similar to and have similar advantages as each lug mentioned in connection with the present invention.

Generally, the lug and the main body may be formed of similar material or the same material. In particular, the lug or at least the composite component of the lug and the main body may be formed integrally as one part. An integrally formed part allows a continuous structure with improved load transfer properties, for example, due to the omission of interfaces between two parts. Alternatively, the lug or at least the composite component of the lug may be formed as an insert, which is bonded to the main body, preferably in between two layers of the main body. When the lug is formed as an insert, the loads between the lug and the main body can be directly transferred between the lug and the main body. No further interface parts are needed, which would increase the weight and the complexity of the load paths.

The composite component comprises continuous fibers and a matrix. The continuous fibers may be carbon and/or glass fibers. Carbon fibers are preferred due to their high stiffness, high tensile strength, and low weight. Glass fibers are an economical choice, still exhibiting high stiffness, high tensile strength, and low weight. Preferably, the matrix comprises a resin, especially an epoxy resin. Epoxy resins are preferred due to their high strength and their ability to provide strong bonds to the continuous fibers. The continuous fibers of the composite component are embedded in the matrix of the composite component. Preferably, the continuous fibers are surrounded by the matrix in radial direction of the continuous fibers.

The sleeve may be formed as a bush or a tube or a liner. The sleeve forms a through hole. The through hole of the sleeve extends along a longitudinal axis. The through hole may have a circular cross section, especially with the longitudinal axis being arranged at the center of the circular cross section. The through hole may be configured to receive a pin or a bolt. The sleeve is arranged at a distance from the main body. Preferably, the sleeve is arranged between the filler component and the distal end of the lug. Thereby, tensile loads acting on the aircraft component can be introduced into the aircraft component via the sleeve. These loads introduced into the sleeve can then be transmitted via the circumferential surface of the sleeve into the composite component, especially the continuous fibers of the composite component.

The filler component may be formed of any material. For example, the filler component may comprise a matrix. The matrix of the filler component may be formed of the same material as the matrix of the composite component. This allows a high degree of cross-linking between the matrix of the filler component and the matrix of the composite component. This provides a mechanically strong interface between the matrix of the filler component and the matrix of the composite component. This improves the load transfer properties between the filler component and the composite component, especially if the aircraft is under compressive load. In addition, the filler component may comprise a filler material embedded in the matrix. The filler component may comprise a resin material, which can function as the matrix of the filler component. Further, the filler component can comprise continuous fibers, which can function as the filler material. It is preferred that the continuous fibers are embedded in the resin material of the filler component. For example, the continuous fibers of the filler component extend parallel to the longitudinal axis of the through hole of the sleeve. Thereby, the load bearing capabilities in the direction parallel to the longitudinal axis of the through hole can be improved.

Further, the intermediate space is formed between the sleeve and the main body. The intermediate space is delimited by the sleeve and the composite component, especially in a plane perpendicular to the longitudinal axis of the through hole of the sleeve. The filler component is arranged within the intermediate space. Compressive loads acting on the aircraft component can be transferred by the filler component between the sleeve and the composite component. These compressive loads can be introduced into the sleeve and can then be transmitted via the filler component and the composite component towards the main body. Preferably, the filler material is bonded to the composite component and/or to the sleeve.

In a preferred embodiment, the main body comprises a reinforced composite component formed of continuous fibers and a matrix, the continuous fibers being embedded in the matrix. Thereby a mechanically robust and light main body is provided. Preferably, the continuous fibers of the main body are carbon and/or glass fibers. Carbon fibers are preferred due to their high stiffness, high tensile strength, and low weight. Glass fibers are an economical choice, still exhibiting high stiffness, high tensile strength, and low weight. For example, all of the continuous fibers of the main body can be carbon fibers. Alternatively, all of the continuous fibers of the main body can be glass fibers. However, this is not necessary. Some of the fibers of the main body may be carbon fibers and some of the fibers of the main body may be glass fibers. Preferably, the matrix of the main body comprises a polymer resin, such as an epoxy resin. An epoxy resin is preferred due to its high strength and its ability to provide strong bonds to the continuous fibers.

In a preferred embodiment, at least a section of the main body and the composite component form a composite structure, wherein the composite structure comprises at least a continuous fiber, which is formed of one of the continuous fibers of the composite component and of one of the continuous fibers of the main body. Such a continuous fiber of the composite structure further increases the strength of the aircraft component, since the continuous fiber of the composite structure provides a mechanically strong, preferably uninterrupted, load path along the continuous fiber of the composite structure and thereby a mechanically strong, preferably uninterrupted, load path between the composite component and the main body. This provides an increased strength, especially an increased tensile strength, of the aircraft component. For similar load requirements, the size of the aircraft component can be further reduced, which further reduces the weight of the aircraft component. Preferably, the composite structure comprises multiple continuous fibers, which are each formed of one of the continuous fibers of the composite component and of one of the continuous fibers of the main body. Multiple such continuous fibers of the composite structure further improve the load transfer properties of the composite structure and make lighter aircraft components possible for similar load requirements. Thereby, a particularly mechanically robust and light aircraft component is provided.

In a preferred embodiment, the main body comprises two layers extending parallel to each other such that a first side of a first layer of the two layers is facing a second side of a second layer of the two layers, wherein a section of the composite component is arranged between the first side of the first layer and the second side of the second layer, wherein the section of the composite component is bonded to the first side of the first layer and to the second side of the second layer. This configuration allows the composite component or the section of the composite component to be designed as an insert, which allows the transfer of loads via the interfaces between the first side of the first layer and the section of the composite component as well as between the second side of the second layer and the section of the composite component. Preferably, the first layer is formed of at least a section of the reinforced composite component of the main body. In particular, the first layer may comprise at least a part of the continuous fibers of the reinforced composite component of the main body. Likewise, the first layer may comprise at least a part of the matrix of the reinforced composite component of the main body. Similarly, the second layer may be formed of at least a further section of the reinforced composite component of the main body. The second layer may comprise at least a further part of the continuous fibers of the reinforced composite component of the main body. Further, the second layer may comprise at least a further part of the matrix of the reinforced composite component of the main body. In addition, the section of the composite component is preferably arranged opposite to a distal end of the lug. Moreover, the section of the composite component may comprise a part of the continuous fibers of the composite component. Likewise, the section of the composite component may comprise a part of the matrix of the composite component. Preferably, the section of the composite component is bonded to the first side of the first layer via a first surface of the part of the matrix of the composite component and a second surface of the part of the matrix of the reinforced composite component of the main body. Furthermore, it is preferred that the section of the composite component is bonded to the second side of the second layer via a third surface of the part of the matrix of the composite component and a fourth surface of the part of the matrix of the reinforced composite component of the main body. Preferably, the matrix of the composite component and the matrix of the reinforced composite component are formed by the same material, especially the same resin, in particular the same epoxy. This allows a high degree of cross-linking between the matrix of the composite component and the matrix of the reinforced composite component, which further improves the load transfer to the sleeve and further structural components.

In a preferred embodiment, the composite component tapers from the main body to the sleeve such that the length of the composite component measured parallel to the longitudinal axis of the through hole of the sleeve decreases towards the distal end of the lug. Thereby, the area over which the load is transferred between the main body and the lug can be increased, which reduces the stresses occurring in the main body and the lug during similar load conditions. Preferably, the increased area is oriented in parallel to the longitudinal axis of the through hole. Thereby, the strength of the aircraft component can be further increased and an even lighter design of the aircraft component is possible for similar load requirements. Preferably, the continuous fibers of the composite component fan out from the sleeve to the main body in the direction of the longitudinal axis of the through hole of the sleeve. Thereby, the area over which the load can be transferred between the main body and the lug can be increased

Furthermore, it is preferred that the composite component tapers from the sleeve to the main body such that the width of the composite component measured perpendicular to a plane extending through the longitudinal axis of the through hole of the sleeve towards the main body decreases from the sleeve towards the main body. This configuration increases the loads the aircraft component is able to transfer between the sleeve and the composite component. In particular, the width of the composite component measured as described before can be designed to be large in a section of the composite component at the distal end of the lug. Further, that width of the composite component can be designed to be small in the area over which the load is transferred between the main body and the lug. This is especially beneficial if the composite component is designed as an insert, since the distance between the first layer of the main body and the second layer of the main body can be chosen to be small. This improves the load transfer between the composite component and the main body and the load distribution in the main body. For example, the risk of delamination under compressive forces can be reduced.

In a preferred embodiment, the main body comprises a first connecting section, which extends along a first connecting section plane and from which the lug extends, wherein the longitudinal axis of the through hole of the sleeve is arranged in the first connecting section plane. Thereby, the load transfer between the first connecting section and the sleeve is optimized, since a line of action of loads acting between the main body and the lug can be arranged in the first connecting section plane. In particular, forces acting along the line of action do not result in bending moments within the first connecting section of the main body. Thereby, a mechanically robust aircraft component is provided, which enables a light design of the aircraft component.

In a preferred embodiment, the main body forms an inner volume, wherein the main body comprises a first connecting section from which the lug extends, wherein the first connecting section comprises a first inner side and a first outer side, the first inner side facing the inner volume and the first outer side facing away from the inner volume, wherein the first inner side extends along a first side plane, wherein the lug is arranged on the same side of the first side plane as the first outer side. This design of the aircraft component provides an optimized design for demoulding, in particular when a single mould is used, since the lug is not arranged in the direction of movement of the mould when the mould is removed from the aircraft component during demoulding.

In a preferred embodiment, the filler component comprises a resin material. Preferably, the resin material is formed of a polymer resin, particularly an epoxy resin. This provides a mechanically robust and light filler component. This further reduces the weight of the aircraft component and increases its strength, in particular towards compressive forces.

In addition, the lugs of the aircraft component may be arranged one after the other along a direction parallel to the longitudinal axis of a through hole of a sleeve of one of the lugs. In particular, the longitudinal axes of the through holes of the sleeves of the lugs may be aligned. Further, two lugs each may form a spacing between the two lugs. The spacing may be delimited by one of the two lugs in one direction along the longitudinal axis of a through hole of a sleeve of one of the lugs. Further, the spacing may be delimited by the other of the two lugs in the opposite direction to the one direction along the longitudinal axis of a through hole of a sleeve of one of the lugs. Each spacing between two respective lugs may extend from the distal end of the lug to the main body. In this configuration it is possible to provide a constant width of the lug from the sleeve to the main body in the direction of the longitudinal axis of the through hole of the sleeve.

Alternatively, each spacing between two respective lugs may extend from the distal ends of the respective lugs to a spacing delimiting surface of the aircraft component. The spacing delimiting surface may be arranged at a distance from the distal end of the respective lugs towards the main body. This distance may be twice the distance between the distal end of the respective lugs and the longitudinal axis of the respective through holes of the respective sleeves. Thereby, each spacing can receive a connecting lug of a counterpart. The spacing delimiting surface may be a surface of a composite component being arranged between two composite components of two neighboring lugs in the direction of the longitudinal axis of a through hole of a sleeve of one of the two neighboring lugs. All these composite components may form an integrally formed main composite component.

Moreover, the aircraft component may be coupled to a bolt or a pin. The bolt or the pin may be received by the sleeve. The sleeve and the bolt or the pin may be pivotably connected to one another. In case the aircraft component comprises multiple lugs, the bolt or the pin may be received by each of the sleeves of the lugs. In this case, the bolt or the pin may be pivotably connected to each of the sleeves. Furthermore, the aircraft component may comprise multiple bolts or multiple pins. Each of the multiple bolts or each of the multiple pins may be pivotably connected to a respective sleeve.

Further, the aircraft component may be mounted on a counterpart which may be a structural component of an aircraft. The counterpart may comprise at least one connecting lug. Each of the at least one connecting lug may receive the bolt or the pin. In case the aircraft component is coupled to multiple bolts or multiple pins, each of the multiple bolts or each of the multiple pins may be received in a respective connecting lug of the at least one connecting lug. Preferably, each of the multiple bolts or each of the multiple pins may be pivotably connected to a respective connecting lug of the at least one connecting lug. It is preferred that the counterpart is a fuselage of an aircraft or a part of a fuselage of an aircraft or a connecting means configured to be attachable to a fuselage of an aircraft or a part of such a connecting means.

In summary, the present invention provides a lightweight aircraft component, which is mechanically robust and is capable of transferring high loads.

In the following an exemplary embodiment of the present invention will be explained in detail with reference to the drawings.
- Figure 1a: shows a cross-sectional schematic view of a section of an aircraft component according to an embodiment of the present invention.
- Figure 1b: shows the cross-sectional schematic view of the aircraft component of Figure 1a during production of the component.
- Figure 2: shows two cross-sectional schematic views of an aircraft component according to an embodiment of the present invention.
- Figure 3: shows two schematic views of a section of the aircraft component according to the embodiment of Figure 1a.
- Figure 4: shows a schematic view of a section of the aircraft component according to the embodiment of Figure 1a.
- Figure 5a: shows a cross-sectional schematic front view of a section of the aircraft component of Figure 1a.
- Figure 5b: shows a cross-sectional schematic front view of a section of the aircraft component of Figure 1a.
- Figure 5c: shows a cross-sectional schematic front view of a section of an aircraft component according to an embodiment of the present invention.
- Figure 6a: shows a cross-sectional schematic side view of a section of an aircraft component according to an embodiment of the present invention.
- Figure 6b: shows a cross-sectional schematic side view of a section of an aircraft component according to an embodiment of the present invention.
- Figure 7: shows a cross-sectional schematic side view of a section of an aircraft component according to an embodiment of the present invention.
- Figure 8: shows three schematic views, each of an aircraft component according to an embodiment of the present invention.
- Figure 9: shows three schematic views, each of an aircraft component according to an embodiment of the present invention.

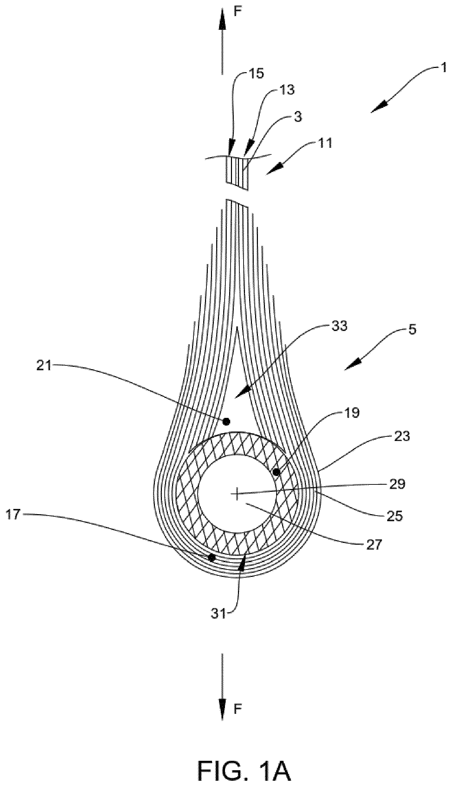

Figure 1a shows a cross-sectional schematic view of a section of an aircraft component 1 according to an embodiment of the present invention. The aircraft component 1 comprises a main body 3 and a lug 5.

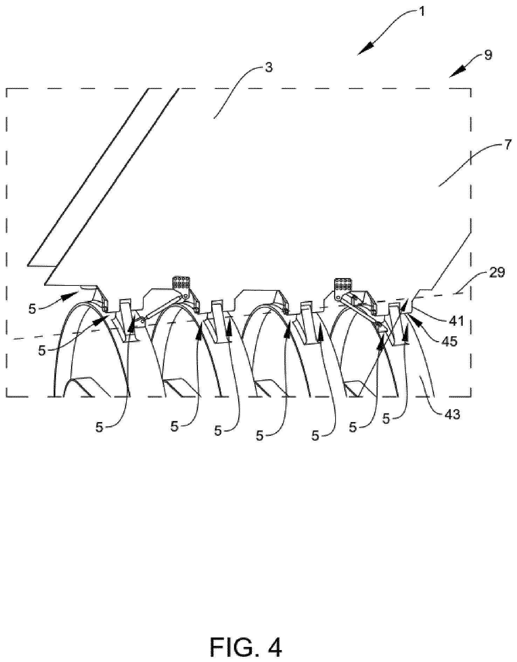

In Figure 1a only a part of the main body 3 is shown. In this embodiment the main body 3 is a skin panel 7 of a vertical stabilizer 9 (see figure 4) of an aircraft. The main body 3 comprises a reinforced composite component 11 formed of continuous fibers 13 and a matrix 15. The continuous fibers 13 of the main body 3 are embedded in the matrix 15 of the main body 3. The continuous fibers 13 of the main body 3 are continuous carbon fibers and/or continuous glass fibers.

The lug 5 is formed of a composite component 17, a sleeve 19, and a filler component 21.

The composite component 17 comprises continuous fibers 23 and a matrix 25. The continuous fibers 23 of the composite component 17 are embedded in the matrix 25 of the composite component 17.

Furthermore, at least a section of the main body 3 and the composite component 17 form a composite structure, wherein the composite structure comprises multiple continuous fibers, which are each formed of one of the continuous fibers 23 of the composite component 17 and of one of the continuous fibers 13 of the reinforced composite component 11 forming the main body 3. This allows a direct connection between the main body 3 and the composite component 17. More precisely, the composite component 17 of the lug 5 and the main body 3 are formed integrally as one part.

The sleeve 19 has a through hole 27. The through hole 27 extends along a longitudinal axis 29. In addition, the sleeve 19 has an outer circumferential surface 31. The sleeve 19 is arranged at a distance from the main body 3.

The composite component 17 extends from the main body 3 around at least a section of the outer circumferential surface 31 of the sleeve 19 and back to the main body 3. Similarly, the continuous fibers 23 of the composite component 17 extend from the main body 3 around the section of the outer circumferential surface 31 of the sleeve 19 and back to the main body 3. Such arrangement of the continuous fibers 23 provides a fiber-layup, which is especially optimized for tensile loads, especially in and contrary to the direction of the forces F in Figure 1a.

The filler component 21 comprises a resin material and continuous fibers. The continuous fibers of the filler component 21 are embedded in the resin material of the filler component 21. The continuous fibers of the filler component 21 are continuous carbon fibers and/or continuous glass fibers. The continuous fibers of the filler component 21 extend parallel to the longitudinal axis 29 of the through hole 27 of the sleeve 19, i.e. perpendicular to the plane of Figure 1a. Particularly, the filler component 21 is configured to transfer compressive loads between the composite component 17 and the sleeve 19 via two opposing interfaces between the composite component 17 and the filler component 21 as well as between the filler component 21 and a further section of the outer circumferential surface 31 of the sleeve 19.

An intermediate space 33 is formed between the sleeve 19 and the main body 3. The intermediate space 33 is delimited by the sleeve 19 and the composite component 17. The filler component 21 is arranged within the intermediate space 33.

Therefore, Figure 1a shows an example of a mechanically robust and weight optimized aircraft component 1, being capable of transferring high loads.

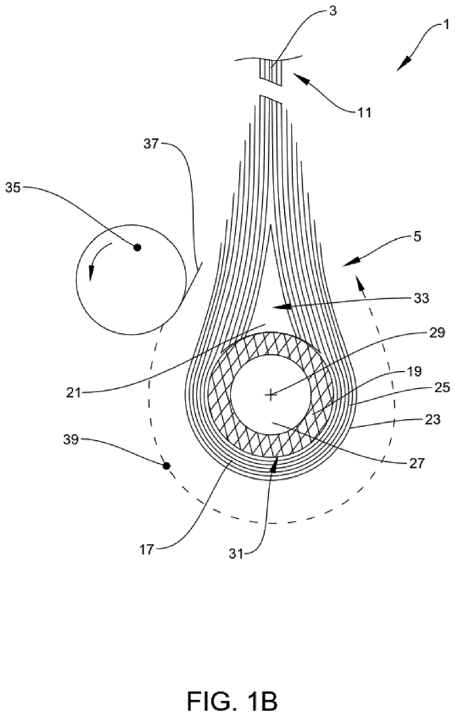

Figure 1b shows the cross-sectional schematic view of the aircraft component 1 similar to Figure 1a during production. A process step in the production of the aircraft component 1 may be a winding process. In the winding process, a spool 35 with continuous fibers 37 may be moved around the filler component 21 and the sleeve 19 along a path 39 during a deposition step. During the movement of the spool 35 around the filler component 21 and the sleeve 19, the continuous fibers 37 of the spool 35 are unwound from the spool 35 and, in a first deposition step, deposited on the filler component 21 and the section of the outer circumferential surface 31 of the sleeve 19 to form a part of the composite component 17 and/or the main body 3. In a second deposition step, preferably after the first deposition step, the spool 35 may be moved around the filler component 21 and the sleeve 19 and the continuous fibers 37 of the spool 35 may be unwound from the spool 35 and deposited on the outer circumferential surface of the previously deposited continuous fibers 37 to form a part of the composite component 17 and/or the main body 3. Multiple second deposition steps may be performed one after the other to form the composite component 17 with a desired thickness of the composite component 17 perpendicular to the longitudinal axis 29 and in the plane of Figure 1b depending on the load requirements.

The continuous fibers 13 of the main body 3 are embedded in the matrix 15 of the main body 3 and the continuous fibers 23 of the composite component 17 are embedded in the matrix 25 of the composite component 17. The embedding of the continuous fibers 13, 23 may be achieved by the continuous fibers 13, 23 being impregnated as they are wound, e.g. by guiding them through a matrix bath. Alternatively, the fibers may be pre-impregnated or post-impregnated with the respective matrix 15, 25.

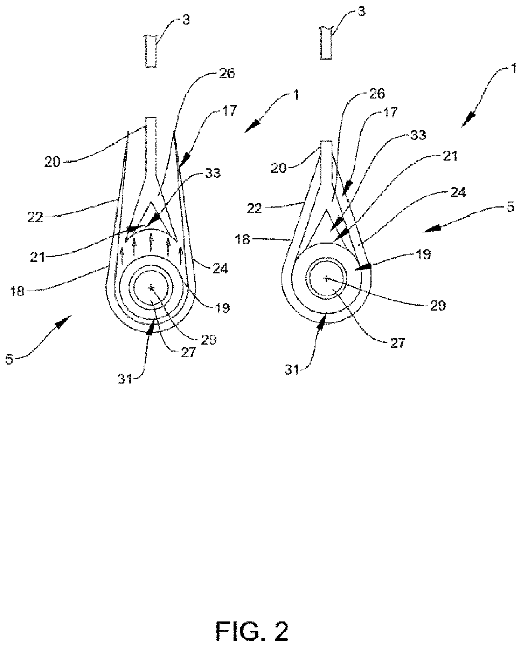

Figure 2 shows two cross-sectional schematic views of an aircraft component 1 according to an embodiment of the present invention. In this embodiment, the composite component 17 is formed of two sections 18, 20. A first section 18 of the two sections extends around the section of the outer circumferential surface 31 of the sleeve 19. A second section 20 of the two sections extends from the main body 3 to the filler component 21. A first end portion 22 and a second end portion 24 of the first section 18 extend each over an end portion 26 of the second section 20 from the sleeve 19 towards the main body 3.

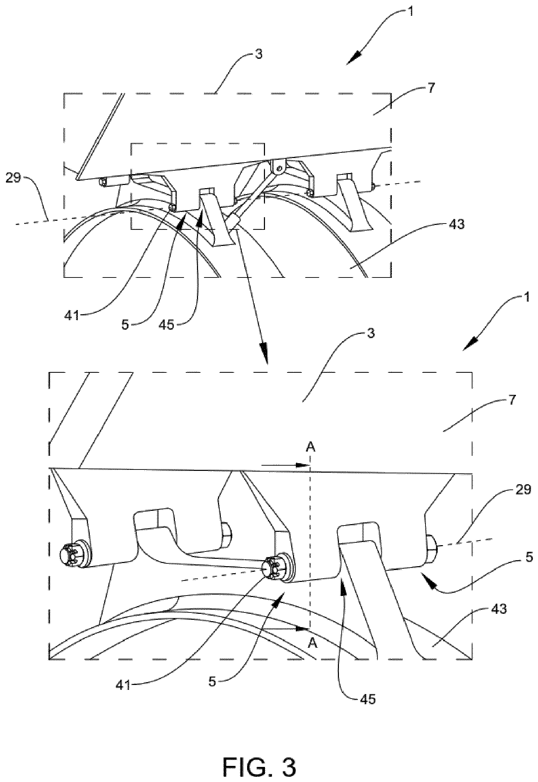

Figure 3 shows two schematic views of a section of the aircraft component 1 according to the embodiment of Figure 1a. Both views of the section of the aircraft component 1 show a section of the main body 3, which is a skin panel 7, and the lug 5. The longitudinal axis 29 is also shown. In the direction of the longitudinal axis 29, a further lug 5 is provided. The two lugs 5 form a spacing. The spacing is delimited by one of the two lugs 5 in one direction along the longitudinal axis 29. Further, the spacing is delimited by the other one of the two lugs 5 in the opposite direction to the one direction along the longitudinal axis 29. Furthermore, the aircraft component 1 is coupled to a bolt 41, which is received by the sleeve 19 (not shown in Figure 3) of the lug 5. The sleeve 19 and the bolt 41 are pivotably connected to one another. The aircraft component 1 is coupled to a counterpart 43. The counterpart 43 comprises a connecting lug 45, which receives the bolt 41. The bolt 41 and the connecting lug 45 are pivotably connected to one another. The counterpart 43 is in this example a fuselage of an aircraft.

Figure 4 shows a schematic view of a section of the aircraft component 1 according to the embodiment of Figure 1a. In Figure 4, a bigger section of the vertical stabilizer 9 can be seen. Further, Figure 4 shows that the aircraft component 1 comprises eight lugs 5, which are provided on a first part of the skin panel 7 arranged in the foreground of Figure 4. In addition, the aircraft component 1 comprises eight further lugs 5, which are positioned on a second part of the skin panel 7 arranged in the background of Figure 4. The aircraft component is coupled to eight bolts 41. Each bolt 41 is received by two respective sleeves 19 of a corresponding lug 5 each. Each bolt 41 is pivotably connected to the respective two sleeves 19. The counterpart 43 comprises eight connecting lugs 45. Each connecting lug 45 receives a corresponding bolt 41. Each bolt 41 is pivotably connected to a respective connecting lug 45.

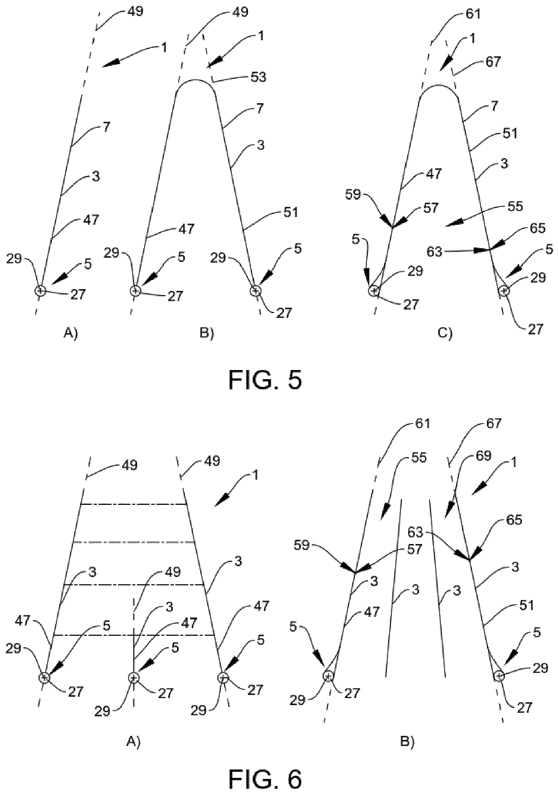

Figure 5a shows a cross-sectional schematic front view of a section of the aircraft component 1 of Figure 1a. One lug 5, one through hole 27 and one longitudinal axis 29 are shown. Figure 5b shows a cross-sectional schematic front view of an enlarged section compared to Figure 5a of the aircraft component 1 of Figure 1a. Two lugs 5, two through holes 27, and two longitudinal axes 29 are shown. In Figure 5a and Figure 5b, the main body 3 comprises a first connecting section 47. The first connecting section 47 extends along a first connecting section plane 49. The lug 5 extends from the first connecting section 47. The longitudinal axis 29 of the through hole 27 of the sleeve 19 (not shown in Figure 5a) is arranged in the first connecting section plane 49. Thereby, the load transfer between the first connecting section 47 and the sleeve 19 is optimized, since a line of action of loads acting between the main body 3 and the lug 5 can be arranged in the first connecting section plane 49. In particular, forces acting along the line of action do not result in bending moments within the first connecting section 47 of the main body 3. In Figure 5b, the main body 3 comprises a second connecting section 51. The second connecting section 51 extends along a second connecting section plane 53. The second lug 5 extends from the second connecting section 51. The second longitudinal axis 29 of the second through hole 27 of the second sleeve 19 (not shown in Figure 5a) is arranged in the second connecting section plane 53.

Figure 5c shows a cross-sectional schematic front view of a section of an aircraft component 1 according to an embodiment of the present invention. The aircraft component 1 comprises a main body 3 and at least two lugs 5. The main body 3 is a skin panel 7 of a vertical stabilizer similar to the one of which a section is shown in Figure 4. In addition to the two lugs 5, Figure 5c shows two through holes 27 and two longitudinal axes 29. The main body 3 forms a first inner volume 55 delimited by a first inner side 57 and a second inner side 63. The main body 3 comprises a first connecting section 47. The lug 5 extends from the first connecting section 47. The first connecting section 47 comprises a first inner side 57 and a first outer side 59, the first inner side 57 facing the inner volume 55 and the first outer side 59 facing away from the inner volume 55. The first inner side 57 extends along a first side plane 61. The lug 5 is arranged on the same side of the first side plane 61 as the first outer side 59.

In addition, the main body 3 comprises a second connecting section 51. The second lug 5 extends from the second connecting section 51. The second connecting section 51 comprises a second inner side 63 and a second outer side 65, the second inner side 63 facing the first inner volume 55 and the second outer side 65 facing away from the first inner volume 55. The second inner side 63 extends along a second side plane 67. The second lug 5 is arranged on the same side of the second side plane 67 as the second outer side 65. Due to the arrangement of the lugs 5 relative to the first side plane 61 and the second side plane 67, respectively, the aircraft component 1 shown in Figure 5c is optimized for demoulding with a single mould, since the lugs 5 are not arranged in the direction of movement of the mould when the mould is removed from the aircraft component during demoulding. This is particularly advantageous, if the skin panel is a multispar skin.

Figure 6a shows a cross-sectional schematic side view of a section of an aircraft component 1 according to an embodiment of the present invention. The aircraft component 1 comprises three main bodies 3. Each main body 3 is a corresponding spar of a vertical stabilizer similar to the one of which a section is shown in Figure 4. Further, Figure 6a shows three lugs 5, three through holes 27, and three longitudinal axes 29. Each main body 3 comprises a corresponding connecting section 47. Each connecting section 47 extends along a corresponding connecting section plane 49. Each lug 5 extends from the corresponding connecting section 47. Each longitudinal axis 29 of the corresponding through hole 27 of the corresponding sleeve 19 (not shown in Figure 6a) is arranged in the corresponding connecting section plane 49. Thereby, the load transfer between each of the connecting sections 47 and the respective sleeves 19 is optimized, since in each case a line of action of loads acting between each main body 3 and the respective lug 5 can be arranged in the respective connecting section plane 49. In particular, forces acting along the line of action do not result in bending moments within the respective connecting section 47 of the each main body 3.

Figure 6b shows a cross-sectional schematic side view of a section of an aircraft component 1 according to an embodiment of the present invention. The aircraft component 1 comprises four main bodies 3. Each main body 3 is a corresponding spar of a vertical stabilizer similar to the one of which a section is shown in Figure 4. The most left main body 3 in Figure 6b is a front spar and the most right main body 3 in Figure 6b is a rear spar. The front spar 3 and the main body 3 second from the left in Figure 6b form an inner volume 55. The front spar 3 comprises a first connecting section 47. The lug 5 extends from the first connecting section 47. The first connecting section 47 comprises a first inner side 57 and a first outer side 59, the first inner side 57 facing the first inner volume 55 and the first outer side 59 facing away from the inner volume 55. The first inner side 57 extends along a first side plane 61. The lug 5 is arranged on the same side of the first side plane 61 as the first outer side 59.

In addition, the rear spar 3 and the main body 3 second from the right in Figure 6b form a second inner volume 69. The rear spar 3 comprises a second connecting section 51. The second lug 5 extends from the second connecting section 51. The second connecting section 51 comprises a second inner side 63 and a second outer side 65, the second inner side 63 facing the second inner volume 69 and the second outer side 65 facing away from the second inner volume 69. The second inner side 63 extends along a second side plane 67. The second lug 5 is arranged on the same side of the second side plane 67 as the second outer side 65. Due to the arrangement of the lugs 5 relative to the first side plane 61 and the second side plane 67, respectively, the aircraft component 1 shown in Figure 5b is optimized for demoulding with a single mould per cell. Especially, an optimized demoulding can be achieved since the lugs 5 are not arranged in the direction of movement of the mould when the mould is removed from the aircraft component 1 during demoulding. This is especially advantageous in a multispar design.

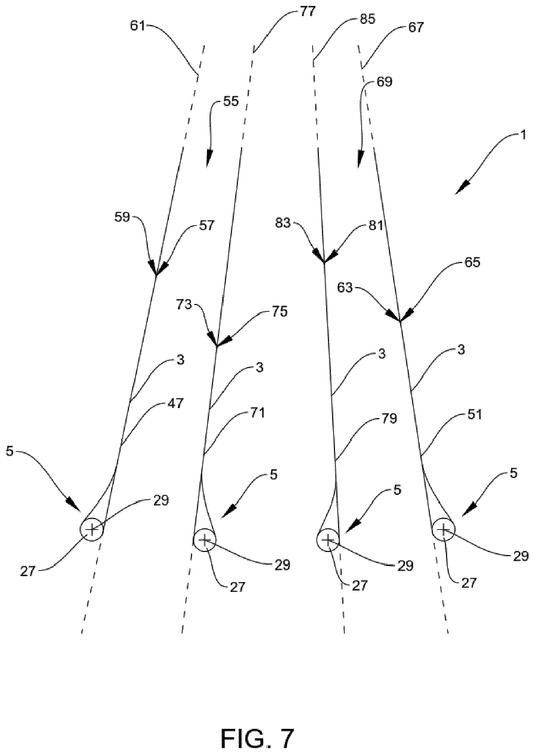

Figure 7 shows a cross-sectional schematic side view of a section of an aircraft component 1 according to an embodiment of the present invention. The aircraft component 1 comprises four main bodies 3. Each main body 3 is a corresponding spar of a vertical stabilizer similar to the one of which a section is shown in Figure 4. The most left main body 3 in Figure 7 is a front spar and the most right main body 3 in Figure 7 is a rear spar. The front spar 3 and the main body 3 second from the left in Figure 7 form an inner volume 55. The front spar 3 comprises a first connecting section 47. The lug 5 extends from the first connecting section 47. The first connecting section 47 comprises a first inner side 57 and a first outer side 59, the first inner side 57 facing the first inner volume 55 and the first outer side 59 facing away from the first inner volume 55. The first inner side 57 extends along a first side plane 61. The lug 5 is arranged on the same side of the first side plane 61 as the first outer side 59. The main body 3 second from the left in Figure 7 comprises a third connecting section 71. The third lug 5 extends from the third connecting section 71. The third connecting section 71 comprises a third inner side 73 and a third outer side 75, the third inner side 73 facing the first inner volume 55 and the third outer side 75 facing away from the first inner volume 55. The third inner side 73 extends along a third side plane 77. The lug 5 is arranged on the same side of the third side plane 77 as the third outer side 75. Due to the arrangement of the lugs 5 relative to the first side plane 61 and the third side plane 77, respectively, the aircraft component 1 shown in Figure 7 is optimized for demoulding with a single mould from within the inner volume 55, since the lugs 5 are not arranged in the direction of movement of the single mould when the single mould is removed from the inner volume 55 during demoulding.

This is especially advantageous in a multispar design.

In addition, the rear spar 3 and the main body 3 second from the right in Figure 7 form a second inner volume 69. The rear spar 3 comprises a second connecting section 51. The second lug 5 extends from the second connecting section 51. The second connecting section 51 comprises a second inner side 63 and a second outer side 65, the second inner side 63 facing the second inner volume 69 and the second outer side 65 facing away from the second inner volume 69. The second inner side 63 extends along a second side plane 67. The second lug 5 is arranged on the same side of the second side plane 67 as the second outer side 65.

The main body 3 second from the right in Figure 7 comprises a fourth connecting section 79. The fourth lug 5 extends from the fourth connecting section 79. The fourth connecting section 79 comprises a fourth inner side 81 and a fourth outer side 83, the fourth inner side 81 facing the second inner volume 69 and the fourth outer side 83 facing away from the second inner volume 69. The fourth inner side 81 extends along a fourth side plane 85. The fourth lug 5 is arranged on the same side of the fourth side plane 85 as the fourth outer side 83. Due to the arrangement of the lugs 5 relative to the second side plane 67 and the fourth side plane 85, respectively, the aircraft component 1 shown in Figure 7 is optimized for demoulding with a single mould from within the second inner volume 69, since the lugs 5 are not arranged in the direction of movement of the single mould when the single mould is removed from the second inner volume 69 during demoulding. This is especially advantageous in a multispar design.

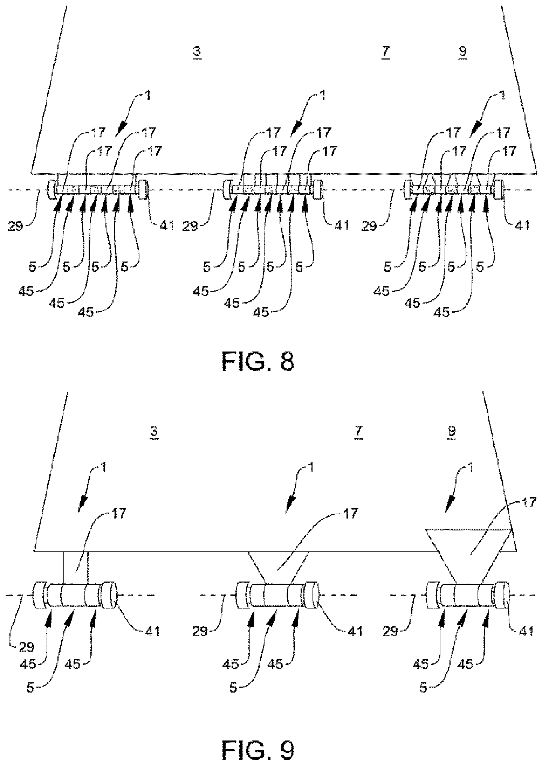

Figure 8 schematically shows three options for configurations of lug assemblies of an aircraft component 1 according to embodiments of the present invention. For simplicity, the main body 3, which is a skin panel 7 of a vertical stabilizer 9, is exemplarily shown only once. Each configuration 1 shown in Figure 8 comprises four lugs 5. The four lugs 5 of each configuration 1 are arranged one after the other along the longitudinal axis 29. In particular, the longitudinal axes 29 of the lugs 5 are aligned. Two lugs 5 each form a spacing between the respective two lugs 5. Each spacing is delimited by one of the two lugs 5 in one direction along the longitudinal axis 29. Further, the spacing is delimited by the other one of the two lugs 5 in the opposite direction to the one direction along the longitudinal axis 29.

In the left configuration in Figure 8, each spacing between two respective lugs 5 extends from the distal ends of the respective lugs 5 to a spacing delimiting surface of the aircraft component 1. The spacing delimiting surface is arranged at a distance from the distal end of the respective lugs 5 towards the main body. The distance is twice the distance between the distal end of the respective lugs 5 and the longitudinal axis 29. The spacing delimiting surface is a surface of a composite component being arranged between two composite components 17 of two neighboring lugs 5 in the direction of the longitudinal axis 29. All these composite components may form an integrally formed main composite component. Each spacing may be formed by cutting out material between two corresponding lugs 5.

In the middle and right configurations in Figure 8, each spacing between two respective neighboring lugs 5 extends from the distal end of the lugs 5 to the main body 3. In this configuration it is possible to provide a constant width in the direction of the longitudinal axis 29 of each lug 5 from the sleeve 19 to the main body 3 (see the middle configuration in Figure 8). In the right configuration in Figure 8, each composite component 17 tapers from the main body 3 to the sleeve 19 (not shown in Figure 8) such that the length of the composite component 17 measured parallel to the longitudinal axis 29 decreases towards the distal end of the lug 5.

Each configuration in Figure 8 is coupled to a bolt 41. Each bolt 41 is received by four respective sleeves 19 (not shown in Figure 8) of a corresponding lug 5 each. Each bolt 41 is pivotably connected to the respective four sleeves 19. In each configuration the aircraft component 1 is coupled with three connecting lugs 45 of a counterpart 43 (not shown in Figure 8). The three connecting lugs 45 are arranged in between two respective neighboring lugs 5. Each connecting lug 45 receives the corresponding bolt 41. Each bolt 41 is pivotably connected to each respective connecting lug 45.

Figure 9 shows schematically three configurations of a sole lug of an aircraft component 1 according to an embodiment of the present invention. For simplicity, the main body 3, which is a skin panel 7 of a vertical stabilizer 9, is exemplarily shown only once. Each configuration shown in Figure 9 comprises a lug 5 and is coupled to a bolt 41. The bolt 41 is received by the sleeve 19 (not shown in Figure 9) of the lug 5. The bolt 41 is pivotably connected to the sleeve 19 (not shown in Figure 9). In each configuration the aircraft component 1 is coupled with two connecting lugs 45 of a counterpart 43 (not shown in Figure 9). Each connecting lug 45 receives the corresponding bolt 41. Each bolt 41 is pivotably connected to each respective connecting lug 45.

In the left configuration in Figure 9, the width of the lug 5 and/or the composite component from the sleeve 19 (not shown in Figure 9) to the main body 3 in the direction of the longitudinal axis 29 is constant.

In the middle and right configurations 1 in Figure 9, the respective composite components 17 taper from the main body 3 to the sleeve 19 (not shown in Figure 9) such that the length of the respective composite component 17 measured parallel to the longitudinal axis 29 decreases towards the distal end of the lug 5.

In the right configuration in Figure 9, the main body 3 comprises two layers extending parallel to each other such that a first side of a first layer of the two layers is facing a second side of a second layer of the two layers. A section of the composite component 17 is arranged between the first side of the first layer and the second side of the second layer. The section of the composite component 17 is bonded to the first side of the first layer and to the second side of the second layer. This is achieved by the lug being formed as an insert which extends into the main body as indicated in the right part of Figure 9.

## Claims

1. An aircraft component (1) comprising
a main body (3),
at least one lug (5) extending from the main body (3),
the lug (5) being formed of a composite component (17), a sleeve (19), and a filler component (21), the sleeve (19) having a through hole (27) extending along a longitudinal axis (29),
wherein the composite component (17) comprises continuous fibers (23) and a matrix (25), the continuous fibers (23) being embedded in the matrix (25),
wherein the sleeve (19) is arranged at a distance from the main body (3),
wherein the composite component (17) extends from the main body (3) around at least a section of the outer circumferential surface (31) of the sleeve (19) and back to the main body (3),
wherein the continuous fibers (23) of the composite component (17) extend from the main body (3) around the section of the outer circumferential surface (31) of the sleeve (19) and back to the main body (3),
wherein an intermediate space (33) is formed between the sleeve (19) and the main body (3), which space (23) is delimited by the sleeve (19) and the composite component (17),
wherein the filler component (21) is arranged within the intermediate space (33).

2. The aircraft component (1) according to claim 1, wherein the main body (3) comprises a reinforced composite component (11) formed of continuous fibers (13) and a matrix (15), the continuous fibers (13) being embedded in the matrix (15).

3. The aircraft component (1) according to claim 2, wherein at least a section of the main body (3) and the composite component (17) form a composite structure, wherein the composite structure comprises at least a continuous fiber, which is formed of one of the continuous fibers (23) of the composite component (17) and of one of the continuous fibers (13) of the main body (3).

4. The aircraft component (1) according to any of claims 1 or 2, wherein the main body (3) comprises two layers extending parallel to each other such that a first side of a first layer of the two layers is facing a second side of a second layer of the two layers, wherein a section of the composite component (17) is arranged between the first side of the first layer and the second side of the second layer, wherein the section of the composite component (17) is bonded to the first side of the first layer and to the second side of the second layer.

5. The aircraft component (1) according to any of the preceding claims, wherein the composite component (17) tapers from the main body (3) to the sleeve (19) such that the length of the composite component (17) measured parallel to the longitudinal axis (29) of the through hole (27) of the sleeve (19) decreases towards the distal end of the lug (5).

6. The aircraft component (1) according to any of the preceding claims, wherein the main body (3) comprises a connecting section, which extends along a connecting section plane and from which the lug (5) extends, wherein the longitudinal axis (29) of the through hole (27) of the sleeve (19) is arranged in the connecting section plane.

7. The aircraft component (1) according to any of claims 1 to 5, wherein the main body (3) forms an inner volume, wherein the main body (3) comprises a connecting section from which the lug (5) extends, wherein the connecting section comprises an inner side and an outer side, the inner side facing the inner volume and the outer side facing away from the inner volume, wherein the inner side extends along a side plane, wherein the lug (5) is arranged on the same side of the side plane as the outer side.

8. The aircraft component (1) according to any of the preceding claims, wherein the main body (3) is a vertical stabilizer (9).

9. The aircraft component (1) according to any of claims 1 to 7, wherein the main body (3) is a skin panel (7).

10. The aircraft component (1) according to any of claims 1 to 7, wherein the main body (3) is a spar.

11. The aircraft component (1) according to any of the preceding claims, wherein the continuous fibers (13, 23) are continuous carbon fibers and/or continuous glass fibers.

12. The aircraft component (1) according to any of the preceding claims, wherein the filler component (21) comprises a resin material.

13. The aircraft component (1) according to claim 12, wherein the filler component (21) comprises continuous fibers, the continuous fibers being embedded in the resin material of the filler component (21).

14. The aircraft component (1) according to claim 13, wherein the continuous fibers of the filler component (21) extend parallel to the longitudinal axis (29) of the through hole (27) of the sleeve (19).
